(19) Europäisches Patentamt
European Patent Office
Office européen des brevets

(11) **EP 2 488 600 B1**

(12) **EUROPÄISCHE PATENTSCHRIFT**

(45) Veröffentlichungstag und Bekanntmachung des Hinweises auf die Patenterteilung:
**16.04.2014  Patentblatt 2014/16**

(21) Anmeldenummer: **10768429.2**

(22) Anmeldetag: **05.10.2010**

(51) Int Cl.:
*C09K 8/584* (2006.01)   *B01F 17/00* (2006.01)

(86) Internationale Anmeldenummer:
**PCT/EP2010/064822**

(87) Internationale Veröffentlichungsnummer:
**WO 2011/045205 (21.04.2011 Gazette 2011/16)**

(54) **VERFAHREN ZUR TERTIÄREN ERDÖLFÖRDERUNG UNTER VERWENDUNG VON TENSIDMISCHUNGEN**

METHOD FOR TERTIARY OIL PRODUCTION USING SURFACTANT MIXTURES

PROCÉDÉ D'EXTRACTION DE PÉTROLE TERTIAIRE AU MOYEN DE MÉLANGES DE TENSIOACTIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2009  EP 09173026**

(43) Veröffentlichungstag der Anmeldung:
**22.08.2012  Patentblatt 2012/34**

(73) Patentinhaber: **BASF SE**
**67056 Ludwigshafen (DE)**

(72) Erfinder:
• **BITTNER, Christian**
  **64625 Bensheim (DE)**
• **OETTER, Günter**
  **67227 Frankenthal (DE)**
• **TINSLEY, Jack**
  **68161 Mannheim (DE)**
• **SPINDLER, Christian**
  **67061 Ludwigshafen (DE)**
• **ALVAREZ JÜRGENSON, Gabriela**
  **68163 Mannheim (DE)**
• **VOGEL, Sophie**
  **68199 Mannheim (DE)**

(56) Entgegenhaltungen:
EP-A1- 1 983 016      WO-A1-2009/050179
WO-A1-2009/124922     WO-A1-2009/130141
US-A- 3 811 504       US-A- 3 811 505

**EP 2 488 600 B1**

**Beschreibung**

Die Erfindung betrifft ein Verfahren zur Erdölförderung, bei dem man eine wässrige Tensidformulierung, welche mindestens ein nichtionisches Tensid mit 8 bis 30 Ethoxyeinheiten, welches eine Polydispersität von 1,01 bis 1,12 aufweist, und mindestens ein weiteres, davon verschiedenes Tensid umfasst, durch Injektionsbohrungen in eine Erdöllagerstätte einpresst und der Lagerstätte durch Produktionsbohrungen Rohöl entnimmt. Bei dem Verfahren kann es sich insbesondere um Winsor Typ III - Mikroemulsionsfluten handeln.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 μm aufweisen. Neben Erdöl, inklusive Anteilen von Erdgas enthält eine Lagerstätte mehr oder weniger stark salzhaltiges Wasser.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche.

Nach der primären Förderung kommt daher die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her.

Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung findet sich beispielsweise im Journal of Petroleum Science and Engineering 19 (1998) 265-280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können auch Gase wie $CO_2$ oder Stickstoff Einsatz finden.

Zur tertiären Erdölförderung gehören weiterhin Verfahren, bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinformation festgehaltenes Erdöl fördern.

Beispielsweise kann man die Grenzflächenspannung σ zwischen dem Erdöl und der wässrigen Phase durch den Zusatz von geeigneten Tensiden absenken. Diese Technik ist auch als "Tensidfluten" bekannt. Hierzu eignen sich insbesondere Tenside, welche σ auf Werte von < $10^{-2}$ mN/m (ultralow interfacial tension) herabsetzen können. Auf diese Art und Weise lassen sich die Öltröpfchen in ihrer Form verändern und durch das Flutwasser durch die Kapillaröffnungen hindurchzwängen.

Die Öltröpfchen können sich anschließend zu einer kontinuierlichen Ölbank vereinigen. Dies hat zweierlei Vorteile: Zum einen können beim Voranschreiten der kontinuierlichen Ölbank durch neues poröses Gestein die sich dort befindlichen Öltropfen mit der Bank verschmelzen. Weiterhin wird durch die Vereinigung der Öltropfen zu einer Ölbank die Öl-Wasser-Grenzfläche deutlich verringert und somit nicht mehr benötigtes Tensid freigesetzt. Das freigesetzte Tensid kann danach in der Formation verbliebene Öltropfen mobilisieren.

Die Anforderungen an Tenside für die tertiäre Erdölförderungen unterscheiden sich deutlich von Anforderungen an Tenside für andere Anwendungen: Geeignete Tenside für die tertiäre Erdölförderung sollen die Grenzflächenspannung zwischen Wasser und Öl (üblicherweise ca. 20 mN/m) auf besonders niedrige Werte von weniger als $10^{-2}$ mN/m reduzieren, um eine ausreichende Mobilisierung des Erdöls zu ermöglichen. Dies muss bei den üblichen Lagerstättentemperaturen von ca. 30°C bis ca. 130°C und in Gegenwart von stark salzhaltigem Wasser, insbesondere auch in Gegenwart von hohen Anteilen von Calcium- und/oder Magnesiumionen erfolgen; die Tenside müssen also auch in stark salzhaltigem Lagerstättenwasser löslich sein.

Zum Erfüllung dieser Anforderungen sind bereits häufig Mischungen von Tensiden vorgeschlagen worden, insbesondere Mischungen aus anionischen und nichtionischen Tensiden.

US 3,811,505 offenbart eine Mischung aus einem anionischen und einem nichtionischen Tensid zum Einsatz in Lagerstätten, deren Lagerstättenwasser 0,5 bis 0,9 Gew. % mehrwertige Ionen enthält. Bei den anionischen Tensiden handelt es sich um Alkylsulfonate bzw. Alkylphosphate mit jeweils 5 bis 25 C-Atomen oder um Alkylarylsulfonate bzw. Alkylarylphosphate, deren Alkylrest jeweils 5 bis 25 C-Atome aufweist. Bei den nichtionischen Tensiden handelt es sich um polyethoxylierte Alkylphenole, welche 6 bis 20 Ethoxygruppen aufweisen und deren Alkylrest 5 bis 20 C-Atome aufweist oder um polyethoxylierte aliphatische Alkohole mit 6 bis 20 C-Atomen und 6 bis 20 Ethoxygruppen.

US 3,811,504 offenbart eine Mischung aus 2 verschiedenen anionischen Tensiden und einem nichtionischen Tensid zum Einsatz in Lagerstätten, deren Lagerstättenwasser 0,15 bis 1,2 % Calcium- und Magnesiumionen enthält. Bei dem ersten anionischen Tensid handelt es sich um Alkyl- oder Alkylarylsulfonate, bei dem zweiten um Alkylpolyethoxysulfate. Bei den nichtionischen Tensiden kann es sich um polyethoxylierte Alkylphenole, welche 6 bis 20 Ethoxygruppen aufweisen und deren Alkylrest 5 bis 20 C-Atome aufweist, oder um polyethoxylierte aliphatische Alkohole mit 6 bis 20 C-Atomen und 6 bis 20 Ethoxygruppen handeln.

US 4,077,471 offenbart eine Tensidmischung zum Einsatz in einer Formation, deren Lagerstättenwasser einen Salzgehalt von 7 bis 22 % aufweist. Die Mischung umfasst ein wasserlösliches Alkylpolyalkoxyalkylsulfonat oder Alkylarylpolyalkoxyalkylsulfonat sowie ein wasserunlösliches nichtionisches Tensid aus einem ethoxylierten aliphatischen Alkohol oder einem ethoxylierten, alkylsubstituierten aromatischen Alkohol, wobei die Kohlenwasserstoffgruppen jeweils 8 bis 24 C-Atome aufweisen und die Anzahl der Ethoxygruppen 1 bis 20 beträgt.

US 2006/0185845 A1 offenbart die Verwendung einer Mischung aus mindestens einem aliphatischen anionischen Tensid und einem verzweigten aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5.

US 2006/0189486 A1 offenbart die Verwendung einer Mischung aus mindestens einem verzweigten aliphatischen anionischen Tensid und einem aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5

Unsere ältere Anmeldung WO 2009/124922 offenbart Tenside der allgemeinen Formel iso-$C_{17}H_{35}$-X, wobei es sich bei X um eine polare Gruppe und bei iso-$C_{17}H_{35}$ um einen Alkylrest mit einem Verzweigungsgrad von 2,8 bis 3,7 handelt. Die Schrift offenbart auch Mischungen von nichtionischen Tensiden der allgemeinen Formel iso-$C_{17}H_{35}$-O-$(CH_2CH(CH_3)O)_n(CH_2CH_2O)_m$-H mit anionischen Tensiden, wobei n für 0 bis 15, m für 1 bis 20, bevorzugt 5 bis 14 und die Summe n+m für 1 bis 35, bevorzugt 2 bis 20 steht. Die Alkoxylierung der Tenside kann mittels saurer Katalyse, KOH-Katalyse oder Katalyse mittels DMC-Katalysatoren vorgenommen werden.

In einer bevorzugten Ausführungsform des Tensidflutens sollten die Tenside mit der Wasser- und der Ölphase eine Mikroemulsion vom Winsor Typ III bilden. Bei einer Mik roemulsion (Winsor Typ III) handelt es sich nicht um eine Emulsion mit besonders kleinen Tröpfchen, sondern um eine thermodynamisch stabile, flüssige Mischung von Wasser, Öl und Tensiden, welche eine sehr niedrige Grenzflächenspannung und in der Regel eine sehr niedrige Viskosität aufweist. Ihre drei Vorteile sind, dass

- dadurch eine sehr niedrige Grenzflächenspannung σ zwischen Erdöl und wässriger Phase erreicht wird,

- sie in der Regel eine sehr niedrige Viskosität aufweist und dadurch nicht in einer porösen Matrix gefangen wird,

- sie schon bei kleinsten Energieeinträgen entsteht und über einen unendlich langen Zeitraum stabil bleiben kann (klassische Emulsionen benötigen hingegen höhere Scherkräfte, welche im Reservoir überwiegend nicht auftauchen, und sind nur kinetisch stabilisiert).

Die Winsor III - Mikroemulsion steht mit überschüssigem Wasser und überschüssigem Öl im Gleichgewicht. Unter diesen Bedingungen der Mikroemulsionsausbildung belegen die Tenside die Öl-Wasser-Grenzfläche und erniedrigen die Grentflächenspannung σ.

Da Winsor III - Mikroemulsionen im Vergleich zu anderen Emulsionstypen besonders niederviskos sind, können sie im Flutprozess durch das poröse Lagerstättengestein. Konventionelle Emulsionen hingegen können in der porösen Matrix hängen bleiben und diese verstopfen. Beim Winsor Typ III Mikroemulsionsfluten handelt es sich folglich um ein äußerst effizientes Verfahren und im Unterschied zu einem Emulsionsflutverfahren bedarf es deutlich weniger Tensid. Beim Mikroemulsionfluten werden üblicherweise die Tenside wahlweise zusammen mit Cosolventien und/oder basischen Salzen (optional in Gegenwart von Chelatbildnern) injiziert. Nachfolgend wird eine Lösung aus verdickendem Polymer zur Mobilitätskontrolle injiziert. Eine weitere Variante ist die Injektion einer Mischung aus verdickendem Polymer sowie Tensiden, Cosolventien und/oder basischen Salzen (optional mit Chelatbildner) und nachfolgend eine Lösung aus verdickendem Polymer zur Mobilitätskontrolle. Diese Lösungen sollten in der Regel klar sein, um Verstopfungen des Reservoirs zu vermeiden.

Die Anforderungen an Tenside für die tertiäre Erdölförderung unterscheiden sich deutlich von Anforderungen an Tenside für andere Anwendungen: Geeignete Tenside für die tertiäre Ölförderung sollen die Grenzflächenspannung zwischen Wasser und Öl (üblicherweise ca. 20 mN/m) auf besonders niedrige Werte von weniger als $10^{-2}$ mN/m reduzieren, um eine ausreichende Mobilisierung des Erdöls zu ermöglichen. Dies muss bei den üblichen Lagerstättentemperaturen von ca. 15°C bis 130°C und in Gegenwart von stark salzhaltigem Wasser, insbesondere auch in Gegenwart von hohen Anteilen von Kalzium- und/oder Magnesiumionen erfolgen; die Tenside müssen also auch in stark salzhaltigem Lagerstättenwasser löslich sein.

Um ein optimales Ergebnis zu erzielen, sollte der Anteil der Mikroemulsion im System Wasser-Mikroemulsion-Öl bei definierter Tensidemenge naturgemäß möglichst groß sein. Die Einsatzparameter, wie beispielsweise Art, Konzentration und das Mischungsverhältnis der eingesetzten Tenside zueinander werden daher vom Fachmann an die in einer gegebenen Erdölformation vorherrschenden Bedingungen (Temperatur, Salzgehalt) angepasst.

Hierbei tritt das Problem auf, dass sich die Konzentration der Tenside während des Tensidflutens in der Erdölformation selbst praktisch nicht konstant halten lässt. Zum einen vermischt sich die in die Injektionsbohrung eingepresste Tensidflut in der Erdölformation mit dem Formationswasser, wobei der Anteil des Formationswassers bezüglich des Öls nicht zwangsläufig in allen Bereichen der Formation gleich sein muss. Weiterhin werden beim oben beschriebenen Verschmelzen der Öltröpfchen zu einer Ölbank lokal wieder Tenside freigesetzt, so dass sich an diesem Ort der Formation die Tensidkonzentration erhöht.

Für das Tensidfluten ist es daher wichtig, dass die optimalen Bedingungen zur Ausbildung der Mikroemulsion vom Winsor III Typ möglichst wenig von der Gesamtkonzentration der eingesetzten Tensidmischung abhängig sind.

Aufgabe der Erfindung war es daher, eine Tensidmischung für den Einsatz zum Tensidfluten zu finden, bei dem die die optimalen Bedingungen zur Ausbildung der Mikroemulsion vom Winsor III-Typ möglichst wenig von der Gesamtkonzentration der eingesetzten Tensidmischung abhängig sind.

Dem entsprechend wurde ein Verfahren zur Erdölförderung gefunden, bei dem man eine wässrige Tensidformulierung umfassend mindestens ein nichtionisches Tensid und mindestens ein weiteres Tensid durch mindestens eine Injektionsbohrung in eine Erdöllagerstätte einpresst und der Lagerstätte durch mindestens eine Produktionsbohrung Rohöl entnimmt, wobei die Tensidmischung mindestens

(A) mindestens ein Tensid (A) der allgemeinen Formel $R^1$-O-$(CH_2$-$CH_2$-O$)_x$-H, wobei $R^1$ für einen geradkettigen oder verzweigten aliphatischen Kohlenwasserstoffrest mit 8 bis 32 Kohlenstoffatomen steht und x für eine Zahl von 8 bis 30, mit der Maßgabe, dass die Polydispersität des Tensids (A) 1,01 bis 1,12 beträgt, sowie

(B) mindestens ein davon verschiedenes Tensid (B) der allgemeinen Formel $R^2$-Y, wobei $R^2$ für einen geradkettigen oder verzweigten aliphatischen und/oder aromatischen Kohlenwasserstoffrest mit 8 bis 32 Kohlenstoffatomen steht und Y für eine hydrophile Gruppe,

umfasst, und wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

Weiterhin wurde eine Tensidmischung für die Erdölförderung gefunden, welche die beiden Tenside (A) und (B) enthält.

Zu der Erfindung ist im Einzelnen das Folgende auszuführen:

Bei dem erfindungsgemäßen Verfahren zur Erdölförderung wird eine wässrige Formulierung eingesetzt, welche mindestens ein Tensid (A) sowie mindestens ein davon verschiedenes Tensid (B) enthält. Sie kann darüber hinaus noch weitere Tenside und/oder andere Komponenten umfassen.

Tenside (A)

Die Tenside (A) weisen die allgemeine Formel $R^1$-O-$(CH_2$-$CH_2$-O$)_x$-H (I) auf. Es können ein oder auch mehrere verschiedene Tenside (A) der Formel (I) eingesetzt werden.

Bei dem Rest $R^1$ handelt es sich um einen geradkettigen oder verzweigten, aliphatischen Kohlenwasserstoffrest mit 8 bis 32 Kohlenstoffatomen, bevorzugt 9 bis 22, besonders bevorzugt 9 bis 18 und ganz besonders bevorzugt 10 bis 17 Kohlenstoffatomen.

Bevorzugt handelt es sich um einen geradkettigen oder verzweigten aliphatischen Kohlenwasserstoffrest mit 9 bis 18 Kohlenstoffatomen.

Ein verzweigter aliphatischer Kohlenwasserstoffrest weist in der Regel einen Verzweigungsgrad von 0,1 bis 4,5, bevorzugt 1 bis 3,5 auf. Der Begriff "Verzweigungsgrad" wird hierbei in prinzipiell bekannter Art und Weise als die Zahl der Methylgruppen in einem Molekül des Alkohols abzüglich 1 definiert. Der mittlere Verzweigungsgrad ist der statistische Mittelwert der Verzweigungsgrade aller Moleküle einer Probe.

In der obigen Formel (I) steht x für eine Zahl von 8 bis 30, bevorzugt 10 bis 18 und ganz besonders bevorzugt 10 bis 15.

Für den Fachmann auf dem Gebiet der Polyalkoxylate ist klar, dass es sich bei den Zahlen x um Mittelwerte über alle Moleküle eine Probe handelt, weil bei der Alkoxylierung von Alkoholen mit Ethylenoxid eine gewisse Verteilung von Kettenlängen erhalten wird. Die Verteilung kann in prinzipiell bekannter Art und Weise durch die sogenannte Polydispersität D beschrieben werden. Bei D = $M_w/M_n$ handelt es sich um den Quotienten aus dem Gewichtsmittel der molaren Masse und dem Zahlenmittel der molaren Masse. Die Polydispersität kann mittels dem Fachmann bekannten Methoden ermittelt werden, beispielsweise mittels Gelchromatographie.

Erfindungsgemäß beträgt die Polydispersität der verwendeten Tenside (A) 1,01 bis 1,12.

In einer bevorzugten Ausführungsform der Erfindung handelt es sich bei $R^1$ um einen linearen, aliphatischen Kohlenwasserstoffrest, insbesondere um einen linearen, aliphatischen Kohlenwasserstoffrest mit 9 bis 18 Kohlenstoffatomen, wobei x für eine Zahl von 8 bis 30, bevorzugt 8 bis 18 steht. Weiterhin bevorzugt beträgt die Polydispersität der Tenside (A) in der besagten bevorzugten Ausführungsform 1,01 bis 1,06.

In einer weiteren bevorzugten Ausführungsform der Erfindung handelt es sich bei $R^1$ um einen verzweigten, aliphatischen Kohlenwasserstoffrest, wobei x für eine Zahl von 10 bis 30, bevorzugt 10 bis 18 steht. Die Polydispersität der Tenside (A) in dieser zweiten bevorzugten Ausführungsform beträgt 1,04 bis 1,12.

Die Tenside (A) können in prinzipiell bekannter Art und Weise die Ethoxylierung von entsprechenden Alkoholen $R^1$-OH hergestellt werden. Die Durchführung von Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Erfindungsgemäß werden die Tenside (A) mittels Techniken mittels dem Fachmann prinzipiell bekannten Techniken synthetisiert, welche zu engeren Molekulargewichtsverteilungen führen als bei anderen Synthesemethoden, beispielsweise der basenkatalysierten Synthese mit KOH oder Alkoholaten. Mittels dieser Techniken lassen sind die erfindungsgemäßen Polydispersitäten der Tenside (A) von 1,01 bis 1,12 erhalten.

Zur Synthese der Tenside (A) können als Katalysator beispielsweise Doppelhydroxidtone wie in DE 43 25 237 A1 beschrieben eingesetzt werden. Weiterhin kann die Synthese beispielsweise unter Verwendung einem Katalysator ausgewählt aus der Gruppe von hydrophobierten Hydrotalciten, modifizierten Oxiden oder Hydroxiden von Calcium, Strontium oder Barium oder Phosphaten von Lanthan oder Lanthaniden durchgeführt werden.

Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart, wie beispielsweise WO 00/74845 oder WO 99/16775. Beispielsweise können Katalysatoren vom Zn-Co-Typ eingesetzt werden.

Zur Durchführung der Reaktion kann der Alkohol $R^1$-OH mit dem Katalysator versetzt werden. Durch verminderten Druck (bspw. <100 mbar (< 10000 Pa)) und/oder Erhöhung der Temperatur (30 bis 150°C) kann noch in der Mischung vorhandenes Wasser abgezogen werden. Anschließend wird mit Inertgas (z.B. Stickstoff) inertisiert und das Ethylenoxid bei Temperaturen von 60 bis 180°C bis zu einem Druck von max. 10 bar schrittweise zugegeben. Es werden üblicherweise nicht mehr als 1000 ppm Katalysator bezüglich der Mischung eingesetzt, und der Katalysator kann aufgrund dieser geringen Menge im Produkt verbleiben. Die Katalysatormenge kann in der Regel geringer sein als 1000 ppm, beispielsweise 250 ppm und weniger.

Tenside (B)

Neben dem mindestens einen Tensid (A) umfasst die verwendete Formulierung mindestens ein davon verschiedenes Tensid (B) der allgemeinen Formel $R^2$-Y (II). Selbstverständlich kann auch eine Mischung mehrerer verschiedener Tenside (B) eingesetzt werden.

Bei $R^2$ handelt es sich um einen geradkettigen oder verzweigten, aliphatischen und/oder aromatischen Kohlenwasserstoffrest mit 8 bis 32 Kohlenstoffatomen, bevorzugt 9 bis 28 und besonders bevorzugt 10 bis 24 Kohlenstoffatomen.

In der Formel (II) steht Y für eine hydrophile Gruppe. Es kann sich hierbei prinzipiell um beliebige hydrophile Gruppen handeln, vorausgesetzt die Gruppe ist ausreichend polar um der Verbindung amphiphile Eigenschaften, also Tensideigenschaften zu verleihen. Es kann sich um nichtionische Tenside, anionische, kationische oder betainische Tenside handeln.

Bevorzugt handelt es sich bei der Gruppe Y um eine Gruppe ausgewählt aus der Gruppe von Sulfatgruppen, Sulfonatgruppen, Polyoxyalkylengruppen, anionisch modifizierten Polyoxyalkylengruppen, Betaingruppen, Glucosidgruppen oder Aminoxidgruppen.

In einer Ausführungsform der Erfindung handelt es sich bei dem Tensid (B) um ein anionisches Tensid, insbesondere um ein Sulfonsäuregruppen aufweisendes anionisches Tensid ohne zusätzliche Alkoxygruppen. Beispiele derartiger Tenside umfassen Alkylbenzolsulfonate, Olefinsulfonate, Paraffinsulfonate, Alkylcarboxylate, Alkylsulfate und/oder Alkylphosphate.

In einer weiteren Ausführungsform der Erfindung handelt es sich bei dem Tensid (B) um ein Tensid ausgewählt aus der Gruppe von Alkylethersulfonaten, Alkylethersulfaten oder Alkylethercarboxylaten, wobei die Polyethergruppe des Tensids jeweils 2 bis 30 Ethereinheiten umfasst. Bei den Ethereinheiten handelt es sich bevorzugt um Ethoxy-, und/oder Propoxyeinheiten. Ganz besonders bevorzugt sind dabei Alkylethersulfate, welche überwiegend Propoxyeinheiten aufweisen. "Überwiegend" bedeutet hierbei, dass es sich bei mindestens 50 % der Ethereinheiten um Propoxyeinheiten handelt.

### Weitere Tenside

Neben den Tensiden (A) und (B) kann die Formulierung darüber hinaus optional noch von (A) und (B) verschiedene Tenside (C) umfassen.

Bei Tensiden (C) kann es sich insbesondere um oligomere oder polymere Tenside handeln. Mit derartigen polymeren Cotensiden lässt sich vorteilhaft die zur Bildung einer Mikroemulsion notwendige Menge an Tensid reduzieren. Derartige polymere Cotenside werden daher auch als "Mikroemulsionsbooster" bezeichnet. Beispiele derartiger polymerer Tenside (C) umfassen amphiphile Blockcopolymere, welche mindestens einen hydrophilen und mindestens einen hydrophoben Blocke umfassen. Beispiele umfassen Polypropylenoxid-Polyethylenoxid-Blockcopolymere, Polyisobuten-Polyethylenoxid-Blockcopolymere sowie Kammpolymere mit Polyethylenoxid-Seitenketten und einer hydrophoben Hauptkette, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu derartigenTensiden sind in WO 2006/131541 offenbart.

### Bevorzugte Kombinationen von Tensiden

Die Tenside (A) und (B) sowie optional (C) werden vom Fachmann je nach den Verhältnissen in der zu behandelnden Erdölformation ausgewählt.

Eine bevorzugte Kombinationen umfasst hierbei Tenside (A) $R^1$-O-(CH$_2$-CH$_2$-O)$_x$-H, bei denen $R^1$ für einen verzweigten, aliphatischen Kohlenwasserstoffrest mit 8 bis 32 Kohlenstoffatomen und x für 11 bis 40 steht. Bevorzugte Anzahlen von Kohlenstoffatomen sowie Werte für x wurden bereits genannt. Die genannten Tenside (A) werden in der bevorzugten Kombination mit Alkylbenzolsulfonaten als Tensiden (B) kombiniert.

Eine zweite bevorzugte Kombination umfasst verzweigte aliphatische Ethoxylate als Tenside (A) mit organischen Sulfonaten, bevorzugt solchen ausgewählt aus der Gruppen von Olefinsulfonaten, Alkylbenzolsulfonaten und Alkylethersulfaten, welche überwiegend Propoxyeinheiten enthalten. "Überwiegend" bedeutet hierbei, dass es sich bei mindestens 50 % der Ethereinheiten um Propoxyeinheiten handelt.

### Verfahren zur Erdölförderung

Beim erfindungemäßen Verfahren zur Erdölförderung wird eine geeignete wässrige Formulierung der Tenside (A) und (B) sowie optional (C) durch mindestens eine Injektionsbohrung in die Erdöllagerstätte eingepresst, und der Lagerstätte wird durch mindestens eine Produktionsbohrung Rohöl entnommen. Eine solche Technik ist auch als "Tensidfluten" bekannt. Mit dem Begriff "Rohöl" ist in diesem Zusammenhang selbstverständlich nicht phasenreines Öl gemeint, sondern gemeint sind die üblichen RohölWasser-Emulsionen. In der Regel wird eine Lagerstätte mit mehreren Injektionsbohrungen und mit mehreren Produktionsbohrungen versehen. Die Hauptwirkung der Tenside liegt hierbei in der Reduzierung der Grenzflächenspannung zwischen Wasser und Öl. Hierdurch wird die Mobilität des Erdöls in der Lagerstätte erhöht, und dadurch kann Erdöl gefördert werden, welches ohne die Anwendung von Tensiden in der Lagerstätte verbliebe. Hierbei sollte die Grenzflächenspannung zwischen Wasser und Öl auf Werte von weniger als 0,1 mN/m, bevorzugt weniger als 0,01 mN/m abgesenkt werden.

Im Anschluss an das Einpressen der Tensidformulierung kann zur Aufrechterhaltung des Drucks Wasser in die Formation injiziert werden ("Wasserfluten"), oder bevorzugt eine höherviskose, wässrige Lösung eines stark verdickend wirkenden Polymers ("Polymerfluten"). Es sind aber auch Techniken bekannt, nach dem man die Tenside zunächst einmal auf die Formation einwirken lässt. Eine weitere bekannte Technik ist die Injektion einer Lösung aus Tensid und verdickend wirkenden Polymer gefolgt von einer Lösung aus verdickend wirkenden Polymer. Dem Fachmann sind Einzelheiten zur technischen Durchführung des "Tensidflutens", "Wasserflutens" und "Polymerflutens" bekannt, und er wendet je nach Art der Lagerstätte eine entsprechende Technik an.

In einer bevorzugten Ausführungsform der Erfindung handelt es sich bei dem erfindungemäßen Verfahren zur Erdölförderung um "Winsor Typ III Mikroemulsionsfluten", d.h. die injizierte Tensidmischung bildet in der Lagerstätte zusammen mit der in der Lagerstätte vorhandenen Wasser- und der Ölphase eine Mikroemulsion Winsor Typ III. Einzelheiten zu Winsor III - Mikroemulsionen sowie deren Vorteilen wurden bereits eingangs geschildert. Zum Winsor Typ III - Mikroemulsionsfluten sollte die Grenzflächenspannung zwischen Wasser und Öl auf Werte von weniger als 0,1 mN/m, bevorzugt weniger als 0,015 mN/m und besonders bevorzugt weniger als 0,01 mN/m abgesenkt werden.

Für das erfindungsgemäße Verfahren wird eine wässrige Formulierung der Tenside (A), (B) sowie optional (C) eingesetzt. Die nachfolgend beschriebenen Formulierungen eignen sich besonders zum Winsor III - Mikroemulsionsfluten, können aber auch für andere Techniken des Tensidflutens eingesetzt werden.

Neben Wasser können die Formulierungen optional auch noch mit Wasser mischbare oder zumindest in Wasser dispergierbare organische Lösemittel umfassen. Derartige Zusätze dienen insbesondere zur Stabilisierung der Tensidlösung während der Lagerung bzw. des Transportes zum Ölfeld. Die Menge derartiger zusätzlicher Lösemittel sollte aber im Regelfalle 50 Gew. %, bevorzugt 20 Gew. % und besonders bevorzugt 10 Gew. % nicht überschreiten. In einer besonders vorteilhaften Ausführungsform der Erfindung wird ausschließlich Wasser zu formulieren verwendet. Beispiele mit Wasser mischbarer Lösemittel umfassen insbesondere Alkohole, wie Methanol, Ethanol oder Propanol sowie $C_1$- bis $C_6$-Monoalkylether von Mono- oder Oligoglykolen mit bis zu 6 Alkylenoxideinheiten wie Butylethylenglykol, Butyldiethylenglykol oder Butyltriethylenglykol.

Das Gewichtsverhältnis der Tenside (A) und (B) zueinander beträgt erfindungsgemäß 10 : 1 bis 1 : 20, bevorzugt 3 : 1 bis 1 : 10 und ganz besonders bevorzugt 2 : 1 bis 1 :4.

Erfindungsgemäß beträgt der Anteil der Tenside (A) und (B) zusammen mindestens 50 Gew. % bezüglich des Anteils aller vorhandenen Tenside, also den Tensiden (A), (B) sowie optional (C) zusammen. Bevorzugt beträgt der Anteil mindestens 75 Gew. %, besonders bevorzugt mindestens 90 Gew. %, und ganz besonders bevorzugt werden als Tenside in der Formulierung nur die Tenside (A) und (B) eingesetzt.

Neben den Tensiden können die Formulierungen auch noch weitere Komponenten enthalten wie beispielsweise $C_4$- bis $C_8$-Alkohole sowie deren Alkoxylate mit bis zu 6 Alkylenoxideinheiten und/oder basische Salze (so genantes "alkali surfactant flooding"). Mit derartigen Zusätzen kann beispielsweise die Retention in der Formation reduziert werden. Das Mengenverhältnis der Alkohole bezüglich der eingesetzten Gesamttensidmenge beträgt in der Regel mindestens 1:1 - es kann jedoch auch ein deutlicher Überschuss an Alkoholen verwendet werden. Die Menge an basischen Salzen kann typischerweise von 0,1 Gew. % bis 5 Gew. % reichen.

Der Fachmann kann durch die Auswahl der Tenside (A) und (B) sowie deren Gewichtsverhältnis zueinander die optimale Temperatur zur Ausbildung einer Mikroemulsion $T_{opt}$ beeinflussen und an die Temperatur der Lagerstätte anpassen.

Die Lagerstätten, in denen das Verfahren angewandt wird, weisen in der Regel eine Temperatur von mindestens 20°C, beispielsweise 20 bis 150°C auf, bevorzugt eine Temperatur von mindestens 30°C und besonders bevorzugt mindestens 50°C, beispielsweise 50 bis 120°C.

Die Gesamtkonzentration aller Tenside zusammen beträgt 0,05 bis 5 Gew. % bezüglich der Gesamtmenge der wässrigen Tensidformulierung, bevorzugt 0,1 bis 2,5 Gew. %. Der Fachmann trifft je nach den gewünschten Eigenschaften, insbesondere je nach den Verhältnissen in der Erdölformation eine geeignete Auswahl. Für den Fachmann ist hierbei klar, dass sich Konzentration der Tenside nach dem Injizieren in die Formation ändern kann, weil sich die Formulierung mit Formationswasser vermischen kann oder Tenside auch an festen Oberflächen der Formation absorbieren können. Es ist der große Vorteil der erfindungsgemäß verwendeten Mischungen, dass die Ausbildung einer Mikroemulsion durch eine derartige Veränderung der Gesamtkonzentration nicht übermäßig stark beeinflusst wird.

Für den Fachmann auf dem Gebiet des Tensidflutens ist klar, dass auch die Lagerstättenbedingungen, wie beispielsweise die Lagerstättentemperatur, der Druck, die Natur des Öls in der Lagerstätte sowie Art und Menge enthaltener Salze die Bedingungen für die optimale Ausbildung einer Winsor III - Mikroemulsion beeinflussen. Unter Berücksichtigung der obigen Angaben kann der Fachmann die Tensidformulierung für die Anwendung in ganz bestimmten Erdöllagerstätten mittels einiger Routineversuche optimieren.

Es ist selbstverständlich möglich und in der Regel auch empfehlenswert, zunächst ein Konzentrat herzustellen, welches erst vor Ort auf die gewünschte Konzentration zum Injizieren in die Formation verdünnt wird. In der Regel beträgt die Gesamtkonzentration der Tenside in einem solchen Konzentrat 15 bis 60 Gew. %, insbesondere 15 bis 45 Gew. %.

Die nachfolgenden Beispiele sollen die Erfindung näher erläutern:

Teil I: Synthese der verwendeten Tenside (A)

Allgemeine Vorschrift 1: Ethoxylierung mittels KOH-Katalyse

In einem 2l Autoklaven wird der zu ethoxylierende Alkohol (1.0 eq) mit einer wässrigen KOH-Lösung, die 50 Gewichtsprozent KOH enthält, versetzt. Dabei beträgt die Menge an KOH 0.3 Gewichtsprozent des herzustellenden Produktes. Unter Rühren wird die Mischung bei 100°C und 20 mbar (2000 Pa) für 2 h entwässert. Anschließend wird dreimal mit $N_2$ gespült, ein Vordruck von ca. 1.3 bar $N_2$ eingestellt und die Temperatur auf 120-130°C erhöht. Das Ethylenoxid wird so zudosiert, dass die Temperatur zwischen 125°C-135°C bleibt. Anschließend wird 5 h bei 125-135°C nachgerührt, mit $N_2$ gespült, auf 70°C abgekühlt und der Reaktor entleert. Das basische Rohprodukt wird mit Hilfe von Essigsäure neutralisiert. Alternativ kann die Neutralisierung auch mit handelsüblichen Mg-Silikaten erfolgen, welche anschließend abfiltriert werden. Das helle Produkt wird mit Hilfe eines 1 H-NMR-Spektrums in CDCl3, einer Gel-Permeations-Chromatographie sowie einer OH-Zahl-Bestimmung charakterisiert und die Ausbeute ermittelt.

Allgemeine Vorschrift 2: Ethoxylierung mittels DMC-Katalyse

In einem 2l Autoklaven wird der zu ethoxylierende Alkohol (1.0 eq) mit einem Doppelmetallcyanid-Katalysator (z.B. DMC-Katalysator der Firma BASF Typ Zn-Co) bei 80°C vermischt. Zur Aktivierung der Katalysators wird bei 80°C für 1 h ca. 20 mbar (2000 Pa) angelegt. Dabei beträgt die Menge an DMC 0.1 Gewichtsprozent und weniger des herzustellenden Produktes. Anschließend wird dreimal mit $N_2$ gespült, ein Vordruck von ca. 1.3 bar $N_2$ eingestellt und die Temperatur auf 120-130°C erhöht. Das Ethylenoxid wird so zudosiert, dass die Temperatur zwischen 125°C-135°C bleibt. Anschließend wird 5 h bei 125-135°C nachgerührt, mit $N_2$ gespült, auf 70°C abgekühlt und der Reaktor entleert. Das helle Produkt wird mit Hilfe eines 1 H-NMR-Spektrums in CDCl3, einer Gel-Permeations-Chromatographie sowie einer OH-Zahl-Bestimmung charakterisiert und die Ausbeute ermittelt.

Allgemeine Vorschrift 3: Sulfatierung mittels Chlorsulfonsäure

In einem 1l Rundhalskolben wird das zu sulfatierende Alkylalkoxylat (1,0 eq) in der 1,5-fachen Menge Dichlormethan (auf Basis von Gewichtsprozent) gelöst und auf 5 bis 10°C abgekühlt. Danach wird Chlorsulfonsäure (1,1 eq) so zugetropft, dass die Temperatur nicht 10°C übersteigt. Man lässt auf Raumtemperatur erwärmen und 4 h bei dieser Temperatur unter N2-Strom rühren, bevor obiges Reaktionsgemisch in eine wässrige NaOH-Lösung mit halbem Volumen bei max. 15°C getropft wird. Die NaOH-Menge ist so berechnet, dass sich ein leichter Überschuss bezüglich der verwendeten Chlorsulfonsäure ergibt. Der resultierende pH-Wert liegt bei ca. pH 9 bis 10. Das Dichlormethan wird unter leichtem Vakuum am Rotationsverdampfer bei max. 50°C entfernt.

Das Produkt wird per 1 H-NMR charakterisiert und der Wassergehalt der Lösung bestimmt (ca. 70%).

Für die Synthese wurden die nachfolgenden Alkohole eingesetzt..

| Alkohol | Beschreibung |
|---------|--------------|
| iC17 | iso-$C_{17}H_{35}$-OH; Oxoalkohol, hergestellt durch Hydroformylierung von iso-Hexadecen, welches durch Tetramerisierung von Buten gewonnen wird. Der mittlere Verzweigungsgrad des Alkohols beträgt 3,1. |
| C16C18 | Kommerziell erhältliches Fettalkoholgemisch bestehend aus linearem $C_{16}H_{33}$-OH und $C_{18}H_{37}$-OH |

Die Alkohole wurden gemäß Vorschrift 1 oder 2 exthoxyliert. Der jeweilige Ethoxylierungsgrad und die erhaltene Polydispersität sind in Tabelle 1 zusammengefasst.

Die Polydispersität der alkoxylierten Produkte wurde jeweils mittels Gelpermeationschromatographie (GPC) bestimmt.

Die verwendete Anlage war eine Agilent 1200 Series mit Pumpe, Degasser, RI-Detektor, Autosampler und Säulenthermostat. Als Software wurde PSS 6.03 verwendet. Als Säulen dienten:

- Vorsäule SDV 5µ - 8x50mm
- SDV 5 µ 100 Å
- SDV 5µ 1000 Å
- SDV 5µ 100000 Å

Kalibrationssubstanzen waren DIN -Polystyrol von PSS. Als Standard dienteToluol. Eluent war Tetrahydrofuran für die Chromatographie. Die Flussrate betrug 1 ml / min. Ca. 25mg der Probe werden in 1ml Lösungsmittel (250ml THF-1,5g Toluol) gelöst, wobei das Toluol schon vorher mit dem THF gemischt wird, um reproduzierbare Ergebnisse zu erzielen.

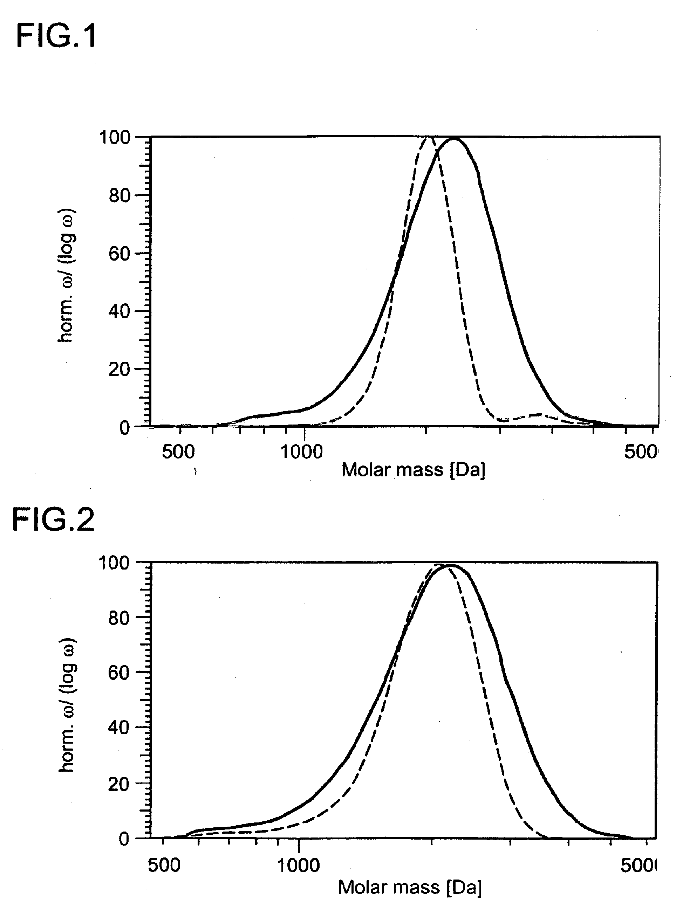

Der Vergleich der Polydispersitäten per GPC zeigt auf, dass per DMC-Katyalyse hergestellte Alkoholethoxylate eine engere Molekulargewichtsverteilung und damit niedrigere Polydispersität als per KOH-Katalyse hergestellte Alkoholethoxylate aufweisen. Dies wird aus den Abbildungen 1 und 2 deutlich.

Abbildung 1:

Mittels GPC ermittelte Molekulargewichtsverteilung $M_n$ von C16C18 - Alkohol, umgesetzt mit ca. 10.5 eq EO umgesetzt. Äußere Kurve (dunkelgrau) nach Verfahren 1 (KOH-Katalyse). Innere Kurve (hellgrau) nach Verfahren 2 (DMC-Katalyse).

Abbildung 2:

Mittels GPC ermittelte Molekulargewichtsverteilung von iC17-Alkohol mit ca. 10.6 eq EO umgesetzt. Äußere Kurve (hellgrau) nach Verfahren 1 (KOH-Katalyse). Innere Kurve (dunkelgrau) nach Verfahren 2 (DMC-Katalyse).

Anwendungstechnische Tests

Mit den erhaltenen Tensiden wurden die folgenden Tests durchgeführt, um deren Eignung zur tertiären Erdölförderung zu bewerten.

Beschreibung der Messmethoden

Ermittlung von SP*

a) Prinzip der Messung:

Die Grenzflächenspannung zwischen Wasser und Öl wurde in bekannter Art und Weise über die Messung des Solubilisationsparameters SP* bestimmt. Die Bestimmung der Grenzflächenspannung über die Bestimmung des Solubilisationsparameters SP* ist eine in der Fachwelt akzeptierte Methode zur näherungsweisen Bestimmung der Grenzflächenspannung. Der Solubilisationsparameter SP *gibt an, wieviel ml Öl pro ml eingesetztem Tensid in einer Mikroemulsion (Windsor Typ III) gelöst wird. Die Grenzflächenspannung $\sigma$ (interfacial tension; IFT) kann hieraus über die Näherungsformel IFT $\approx 0.3/(SP^*)^2$ errechnet werden, falls gleiche Volumina von Wasser und Öl eingesetzt werden (C. Huh, J. Coll. Interf. Sc., Vol. 71, No. 2 (1979)).

b) Arbeitsvorschrift

Zur Bestimmung des SP* wird ein 100 ml Messzylinder mit Magnetrührfisch mit 20 ml Öl und 20 ml Wasser befüllt. Dazu werden 10, 5, 2.5, 1.2 oder 0.6 Gewichtsprozent Tensid bzgl. der Wasserphase gegeben. Anschließend wird die Temperatur von 20 auf 90°C schrittweise erhöht, und es wird beobachtet, in welchem Temperaturfenster sich eine Mikroemulsion bildete.
Die Ausbildung der Mikroemulsion kann visuell beobachtet werden oder auch mit Hilfe von Leitfähigkeitsmessungen. Es bildet sich ein Dreiphasensystem aus (obere Phase Öl, mittlere Phase Mikroemulsion, untere Phase Wasser). Sind obere und untere Phase gleich groß und verändern sich über einen Zeitraum von 12 h auch nicht mehr, so hat man die optimale Temperatur ($T_{opt}$) der Mikroemulsion gefunden. Das Volumen der mittleren Phase wird bestimmt. Von diesem Volumen wird das Volumen an zugegebenem Tensid abgezogen. Der erhaltene Wert wird danach durch zwei geteilt. Dieses Volumen wird nun durch das Volumen an zugegebenem Tensid geteilt. Das Ergebnis wird als SP* notiert.
Die Art der zur Bestimmung von SP* eingesetzten Öls und Wassers wird je nach dem zu untersuchenden System bestimmt. Es kann einerseits Erdöl selbst eingesetzt werden, oder auch ein Modellöl wie beispielsweise Decan oder Hexadecan. Als Wasser kann sowohl reines Wasser eingesetzt werden, wie auch salines Wasser, um die Verhältnisse in der Erdölformation besser zu modellieren. Die Zusammensetzung der wässrigen Phase kann beispielsweise entsprechend der Zusammensetzung eines bestimmten Lagerstättenwassers eingestellt werden.
Angaben zu der verwendeten wässrigen Phase und der Ölphase finden sich unten bei der konkreten Beschreibung der Versuche.

Testergebnisse:

Es wurde eine 1 : 1 Mischung aus Decan und einem stark salzhaltigen Wasser eingesetzt (Salzgehalt in Gewichtsprozent: 13.2% NaCl, 4.26% $CaCl_2$, 1.05% $MgCl_2$, 0.03% $Na_2SO_4$).
Dazu wurde eine Tensidmischung aus dem jeweils verwendeten Alkylethoxylat und dem Dodecylbehzolsulfonat gegeben. Die Gesamttensidkonzentration variierte von 10.0 Gewichtsprozent bis 0.6 Gewichtsprozent der Wasserphase. Die Ergebnisse sind in den Tabellen 1 und 2 zusammengestellt. $\Delta T_{opt}$ ist hierbei jeweils die Differenz zwischen der größten und der kleinsten $T_{opt}$ jeder Versuchsreihe.

Tabelle 1: Zusammenstellung der Ergebnisse mit Tensiden (A) auf Basis von iC$_{17}$-Alkoholen

| Beispiel Nr. | Tensid (A) | Vorschrift | D | Tensid (B) | Gewichtsverhältnis (A)/(B) | Gesamt konzentration der Tenside [%] | $T_{opt}$ [°C] | SP* | IFT [mN/m] bei $T_{opt}$ | $\Delta$ $T_{opt}$ [°C] |
|---|---|---|---|---|---|---|---|---|---|---|
| V1 | iC17-14.0 EO-H | 1 | 1,11 | $C_{12}H_{25}PhSO_3Na$ | 2:1 | 10.0 | 57 | 4.4 | 0,0155 | |
| | | KOH | | | | 5 | 60 | 3.5 | 0,044 | |
| | | | | | | 2.5 | 62 | 3 | 0,033 | 8 |
| | | | | | | 1.2 | 65 | 2.6 | 0,0444 | |
| | | | | | | 0.6 | 65 | 2.6 | 0,0444 | |
| | | | | | | | | | | |
| Beispiel 1 | iC17-13.1 EO-H | 2 | 1,06 | $C_{12}H_{25}PhSO_3Na$ | 2:1 | 10.0 | 52 | 4.9 | 0,0125 | |
| | | DMC | | | | 2.5 | 53 | 4.3 | 0,0162 | 4 |
| | | | | | | 0.6 | 57 | 3.7 | 0,0219 | |
| | | | | | | | | | | |
| V2 | iC17-10.6 EO-H | 1 | 1,13 | $C_{12}H_{25}PhSO_3Na$ | 2:1 | 10.0 | 35 | >10 | <0,003 | |
| | | KOH | | | | 5 | 40 | 9.5 | 0,0033 | |
| | | | | | | 2.5 | 42 | 9 | 0,0037 | 17 |
| | | | | | | 1.2 | 48 | 7.8 | 0,0049 | |
| | | | | | | 0.6 | 52 | 4.7 | 0,0136 | |

Tabelle 1 (Fortsetzung): Zusammenstellung der Ergebnisse mit Tensiden (A) auf Basis von iC$_{17}$-Alkoholen

| Beispiel Nr. | Tensid (A) | Vorschrift | D | Tensid (B) | Gewichtsverhältnis (A)/(B) | Gesamtkonzentration [%] | $T_{opt}$ [°C] | SP* | IFT [mN/m] bei $T_{opt}$ | $\Delta T_{opt}$ [°C] |
|---|---|---|---|---|---|---|---|---|---|---|
| Beispiel 2 | iC17 - 10.9 EO - H | 2 | 1,07 | C$_{12}$H$_{25}$PhSO$_3$Na | 2:1 | 10.0 | 33 | 9 | 0,00370 | 2 |
| | | DMC | | | | 2.5 | 32 | 9.25 | 0,00351 | |
| | | | | | | 0.6 | 31 | 7.8 | 0,00493 | |
| | | | | | | | | | | |
| V 3 | iC17 - 10.6 EO - H | 1 | 1,13 | C$_{12}$H$_{25}$PhSO$_3$Na | 4:1 | 10.0 | 37 | >9.5 | <0,0033 | 17 |
| | | KOH | | | | 2.5 | 54 | 6 | 0,00833 | |
| | | | | | | 0.6 | 53 | 4 | 0,01875 | |
| | | | | | | | | | | |
| Beispiel 3 | iC17 - 10.9 EO - H | 2 | 1,07 | C$_{12}$H$_{25}$PhSO$_3$Na | 4:1 | 10.0 | 42 | >9.5 | <0,0033 | 7 |
| | | DMC | | | | 2.5 | 49 | 7.5 | 0,00533 | |
| | | | | | | 0.6 | 48 | 6 | 0,00833 | |
| | | | | | | | | | | |
| V4 | iC17 - 8 EO - H | 1 | 1,16 | C$_{12}$H$_{25}$PhSO$_3$Na | 4:1 | 10.0 | 10 | >9.5 | <0,0033 | 26 |
| | | KOH | | | | 2.5 | 26 | 30 | 0,00033 | |
| | | | | | | 0.6 | 36 | 8 | 0,00469 | |
| | | | | | | | | | | |
| Beispiel 4 | iC17-8.6 EO-H | 2 | 1,12 | C$_{12}$H$_{25}$PhSO$_3$Na | 4:1 | 10.0 | 24 | >9.5 | <0.0033 | 12 |
| | | DMC | | | | 2.5 | 31 | 16 | 0,00117 | |
| | | | | | | 0.6 | 36 | 9 | 0,00370 | |

EP 2 488 600 B1

Tabelle 2: Zusammenstellung der Ergebnisse mit Tensiden (A) auf Basis von C16C18-Alkoholen

| Beispiel Nr. | Tensid (A) | Vorschrift | D | Tensid (B) | Verhältnis (A)/(B) | Gesamt konzentration [%] | $T_{opt}$ [°C] | SP* | IFT [mN/m] bei $T_{opt}$ | $\Delta T_{opt}$ [°C] |
|---|---|---|---|---|---|---|---|---|---|---|
| V 5 | C16C18 - 10.6 EO - H | 1 | 1,11 | $C_{12}H_{25}PhSO_3Na$ | 2:1 | 10.0 | 48 | 8.5 | 0,0042 | |
| | | KOH | | | | 5 | 53 | 7 | 0,0061 | |
| | | | | | | 2.5 | 55 | 6.5 | 0,0071 | 13 |
| | | | | | | 1.2 | 58 | 4.7 | 0,0136 | |
| | | | | | | 0.6 | 61 | 3.7 | 0,019 | |
| Beispiel 5 | C16C18 - 10.5 EO - H | 2 | 1,04 | $C_{12}H_{25}PhSO_3Na$ | 2:1 | 10.0 | 46 | >9.5 | < 0,00332 | |
| | | DMC | | | | 2.5 | 47 | 9.3 | 0,00347 | 2 |
| | | | | | | 0.6 | 49 | 7.8 | 0,00493 | |
| V 6 | C16C18 - 8.4 EO - H | 1 | 1,10 | $C_{12}H_{25}PhSO_3Na$ | 2:1 | 10.0 | 30 | >9.5 | <0,00332 | |
| | | KOH | | | | 2.5 | 29 | 17.5 | 0,00098 | 5 |
| | | | | | | 0.6 | 35 | 9.9 | 0,00306 | |
| Beispiel 6 | C16C18 - 8.6 EO - H | 2 | 1,03 | $C_{12}H_{25}PhSO_3Na$ | 2:1 | 10.0 | 32 | >9.5 | <0,00332 | |
| | | DMC | | | | 2.5 | 32 | 17.5 | 0,00098 | 1 |
| | | | | | | 0.6 | 33 | 14 | 0,00153 | |
| V 7 | C16C18 - 8.4 EO-H | 1 | 1,10 | $C_{12}H_{25}PhSO_3Na$ | 8:1 | 10.0 | 38 | >9.5 | <0,00333 | |
| | | KOH | | | | 2.5 | 47 | 6 | 0,00833 | 17 |
| | | | | | | 0.6 | 55 | 4.7 | 0,01358 | |
| Beispiel 7 | C16C18 - 8.6 EO - H | 2 | 1,03 | $C_{12}H_{25}PhSO_3Na$ | 8:1 | 10.0 | 37 | > 9,5 | < 0,00333 | |
| | | DMC | | | | 2.5 | 42 | 9 | 0,00370 | 11 |
| | | | | | | 0.6 | 48 | 8 | 0,00469 | |

Die Beispiele und Vergleichsbeispiele zeigen, dass Tenside, welche mit DMC-Katalysatoren hergestellt werden und dementsprechend niedrigere Polydispersitäten aufweisen als mit der klassischen KOH-Katalyse erhaltene Tenside, bessere Ergebnisse liefern.

Im Fall der per DMC-Katalyse (Verfahren 2) hergestellten Alkoholethoxylate ist der Anstieg der optimalen Temperatur bei Erniedrigung der Gesamttensidkonzentration deutlich geringer ausgeprägt als bei Verbindungen mit vergleichbarem Ethoxylierungsgrad, welche aber mittels KOH-Katalyse hergestellt werden; d.h. $\Delta T_{opt}$ ist bei den mittels DMC-Katalyse hergestellten Verbindungen jeweils deutlich kleiner.

Dies ist von großer Bedeutung für Tensidflutungen der Lagerstätte. Infolge von möglichen Verdünnungen der Tensidlösung in der Formation (z.B. durch einen unterirdischen Aquifer, Vermischungen mit Reservoirwasser) verringert sich die Tensidkonzentration. Dadurch würde sich die optimale Temperatur der Tensidlösung von der Temperatur der Lagerstätte weit entfernen, was zu einem Anstieg der Grenzflächenspannung führen würde (Verlassen des Mikroemulsionsbereich Winsor Typ III).

Die mittels DMC-Katalyse hergestellten Tenside weisen darüber hinaus den Vorteil auf, dass deren Grenzflächenspannung fast immer niedriger ist als bei den entsprechend KOH-katalysierten Alkylethoxylaten. Beispiel 3 und Vergleichsbeispiel V 3 zeigen dies bei einer Temperatur von ca. 40-50°C sehr gut auf. Je niedriger die Grenzflächenspannung ist, desto niedriger sind die zu überwindenden Kapillarkräfte und desto höher ist die spätere Erdölproduktion. Der Effekt einer niedrigeren Grenzflächenspannung ist insbesondere ausgeprägt bei den Tensiden mit einem Ethoxylierungsgrand von weniger als 11. Im Fall der DMC-Katalyse lassen sich also Tenside mit einem geringeren Ethoxylierungsgrad verwenden, wobei dennoch niedrige Grenzflächenspannungen erreicht werden.

Dies hat weitere Anwendungsvorteile: Tensidmischungen werden vom Fachmann unter anderem deswegen eingesetzt, um die hydrophob-hydrophil-Balance des Tensidsystems optimal an die Bedingungen der Erdölformation einstellen zu können. Setzt man also ein stark hydrophiles Tensid ein, so muss dies im Regelfalle durch ein stärker hydrophobes zweites Tensid kompensiert werden. Eine Verstärkung der Hydrophobizität von Tensiden ist jedoch u.U. schwierig. So ist beispielsweise eine Verlängerung der Alkylgruppe von Tensid (B) aufgrund der begrenzten Verfügbarkeit entsprechend langkettiger Bausteinen nicht immer möglich.

Ein geringer ethoxyliertes Tensid (A) ist weniger hydrophil als höher ethoxylierte Verbindungen. Dementsprechend braucht ein zweites Tensid nicht extrem hydrophob zu sein. Der Fachmann gewinnt hierdurch also neue Freiheitsgrade in der Formulierung.

Im Fall von verzweigten Alkoholen (siehe Tabelle 1) reicht bei Tensiden nach Verfahren 2 und Lagerstätten-Temperaturen von ca. 30°C ein Mindestethoxylierungsgrad von 10, um $T_{opt}$ von 5°C und weniger zu erreichen (Beispiel 2 und 4). Vergleichsbeispiel V2 (KOH-Katalyse) zeigt bei einem Ethoxylierungsgrad von 10 eine deutlich größere Differenz $\Delta T_{opt}$. Für Lagerstätten-Temperaturen von 60°C ist der Einsatz von Tensideb mit einem Mindestethoxylierungsgrad von 13 empfehlenswert (Beispiel 1).

Im Fall von linearen Alkoholen (Tabelle 2) reicht bei einer Lagerstätten-Temperatur von 30°C generell ein Mindestethoxylierungsgrad von 8 aus (Beispiel 6 und Vergleichsbeispiel V 6). Die DMC-katalysierte Verbindung (Beispiel 6) weist mit $\Delta T_{opt}$ von 1 °C wiederum ein besseres Verhalten als die KOH-katalysierte Verbindung auf (Vergleichsbeispiel V6 mit $\Delta T_{opt}$ von 5°C) auf.

In einer weiteren Versuchsserie wurden folgende Untersuchungen mit dem Rohöl einer Lagerstätte in Süddeutschland durchgeführt:

- Das Rohöl weist API 33° auf.
- Die Lagerstättentemperatur beträgt ca. 55°C
- Das Reservoirwasser hat einen Salzgehalt von 3570 ppm TDS (total dissolved salt).

Zu einer NaCl-Lösung wurden 1 % $Na_2CO_3$, eine Tensidmischung aus 3 Teilen $C_{16}C_{18}$-7PO-0.1EO-Sulfat und 1 Teil Dodecylbenzolsulfonat (Lutensit A-LBN 50 ex BASF) sowie eine variable Menge an sec-Butanol (s-BuOH) bzw. $C_{16}C_{18}$-10 EO (hergestellt per KOH-Katalyse; D = 1,11) bzw. $C_{16}C_{18}$-10 EO (hergestellt per DMC-Katalyse, D = 1,04) gegeben. Die gesamte Tensidkonzentration sowie die Menge an $Na_2CO_3$ sind in Gewichtsprozent der wässrigen Phase angegeben. Die Löslichkeit der Tensidmischung bei verschiedenen Temperaturen wird bestimmt. Das Verhalten des binären Systems (salines Wasser und Tenside) wird in der nachfolgenden Tabelle bei den Temperaturen angegeben, bei denen man in Gegenwart von Rohöl eine Mikroemulsionsbildung beobachtet.

Als nächstes wird das ternäre System untersucht, indem man eine 1:1 Mischung aus Rohöl und der obigen salinen Tensidlösung herstellt. Optimale Temperatur $T_{opt}$ der Bildung von Mikroemulsionen nach Winsor Typ III wird notiert.

Abschließend werden Grenzflächenspannungen von Rohöl in Gegenwart von Tensidlösungen bei 50°C per spinning-drop-Verfahren an einem SVT20 der Firma DataPhysics bestimmt. Dazu wird ein Öltropfen in eine mit saliner Tensidlösung gefüllter Kapillare bei 50°C injiziert und die Ausdehnung des Tropfens bei ca. 4500 Umdrehungen pro Minute beobachtet bis ein konstanter Wert sich einstellt. Dies ist üblicherweise nach 2 h der Fall. Die Grenzflächen-

spannung IFT (oder $\sigma_{\parallel}$) errechnet sich dabei - wie von Hans-Dieter Dörfler in "Grenzflächen und kolloid-disperse Systeme" Springer Verlag Berlin Heidelberg 2002 beschrieben - nach folgender Formel aus dem Zylinderdurchmesser $d_z$, der Drehzahl $\omega$, und der Dichtedifferenz $(d_1-d_2)$:

$$\sigma_{\parallel} = 0{,}25 \cdot d_z{}^3 \cdot \omega 2 \cdot (d_1-d_2)$$

Die Ergebnisse sind in Tabelle 3 zusammengestellt.

Tabelle 3:

| Beispiel | Tensidformulierung | Na$_2$CO$_3$ | NaCl | T$_{opt}$ | Löslichkeit im binären System bei T$_{opt}$ |
|---|---|---|---|---|---|
| V8 | 3% C$_{16}$C$_{18}$-7PO-0.1EO-Sulfat, 1% Dodecylbenzolsulfonat, 8% s-BuOH | 1% | 2,5% | 35°C | klar |
| V9 | 1,5% C$_{16}$C$_{18}$-7PO-0-1EO-Sulfat, 0,5% Dodecylbenzolsulfonat, 4% s-BuOH | 1% | 2,5% | 56°C | klar |
| V10 | 0,75% C$_{16}$C$_{18}$-7PO-0.1EO-Sulfat, 0,25% Dodecylbenzolsulfonat, 2% s-BuOH | 1% | 2,5% | 62°C | klar |
| V11 | 3% C$_{16}$C$_{18}$-7PO-0.1EO-Sulfat, 1% Dodecylbenzolsulfonat, 2% C$_{16}$C$_{18}$-10EO(KOH, D = 1,11) | 1% | 3% | 53°C | klar |
| V12 | 1,5% C$_{16}$C$_{18}$-7PO-0.1EO-Sulfat, 0,5% Dodecylbenzolsulfonat, 1% C$_{16}$C$_{18}$-10EO(KOH, D = 1,11) | 1% | 3% | 63°C | klar |
| V13 | 0,75% C$_{16}$C$_{18}$-7PO-0.1EO-Sulfat, 0,25% Dodecylbenzolsulfonat, 0,5% C$_{16}$C$_{18}$-10EO(KOH, D = 1,11) | 1% | 3% | 65°C | klar |
| 8 | 3% C$_{16}$C$_{18}$-7PO-0.1EO-Sulfat, 1% Dodecylbenzolsulfonat, 2% C$_{16}$C$_{18}$-10EO(DMC, D = 1,04) | 1% | 3% | 49°C | klar |
| 9 | 1,5% C$_{16}$C$_{18}$-7PO-0.1EO-Sulfat, 0,5% Dodecylbenzolsulfonat, 1% C$_{16}$C$_{18}$-10EO (DMC, D = 1,04) | 1% | 3% | 49°C | klar |
| 10 | 0,75% C$_{16}$C$_{18}$-7PO-0.1EO-Sulfat, 0,25% Dodecylbenzolsulfonat, 0,5% C$_{16}$C$_{18}$-10EO (DMC, D = 1,04) | 1% | 3% | 50°C | klar |

Zur Ausbildung von Mikroemulsionen Winsor Typ III innerhalb von 1 bis 2 h Separationszeit benötigte man wie in den Vergleichsbeispielen V8, V9 und V10 relativ hohe Mengen an sec-Butanol. Dadurch wird die Wirtschaftlichkeit des Verfahrens stark beeinträchtigt. Zudem ist das System sehr empfindlich gegenüber Reduzierung der Gesamtmenge an Formulierung. Die optimale Temperatur steigt von 35°C auf 62°C an. Dies ist äußerst ungünstig vor dem Hintergrund von Konzentrationsschwankungen im Flutprozess infolge von Adsorption oder Retention.

Wie in Vergleichsbeispielen V11, V12 und V13 zu sehen hat die Verwendung von Alkylethoxylaten den deutlichen Vorteil, dass die Menge an Chemikalien gegenüber den Formulierungen auf Basis von sec-Butanol deutlich reduziert werden konnte. Jedoch fällt auf, dass immer noch eine deutliche Abhängigkeit der optimalen Temperatur von der Einsatzmenge an Tensidformulierung besteht. Der Anstieg beträgt zwar nur noch 12°C, ist aber immer noch signifikant.

Formulierungen auf Basis von Alkylethoxylaten gleichen Ethoxylierungsgrades jedoch mit engerer Molekulargewichtsverteilung (Polydispersität von 1,04 anstatt 1,11) weisen, wie in Beispielen 8, 9 und 10 zu sehen ist, eine sehr gute Robustheit auf. Die Schwankung der optimalen Temperatur ist minimal (lediglich 1°C). Zudem kann mit deutlich weniger Chemikalien als im Fall von sec-Butanol gearbeitet werden.

Grenzflächenspannungsmessungen bei 50°C ergaben sehr niedrige Werte, die für die Mobilisierung von Erdöl in Lagerstätten angestrebt werden. Es wurden deutlich niederigere Konzentrationen als bei den Phasenuntersuchungen eingesetzt, um das Potential und die Wirtschaftlichkeit zu demonstrieren.

Die Ergebnisse sind in Tabelle 4 zusammengestellt.

Tabelle 4:

| Beispiel | Tensidformulierung | $Na_2CO_3$ | NaCl | IFT | Löslichkeit im binären System bei 50°C |
|---|---|---|---|---|---|
| 11 | 0,15% $C_{16}C_{18}$-7PO-0.1EO-Sulfat, 0,05% Dodecylbenzolsulfonat, 0,1% $C_{16}C_{18}$-10EO (DMC, D = 1,04) | 1% | 3% | 0,0038 mN/m | klar |
| 12 | 0,075% $C_{16}C_{18}$-7PO-0.1EO-Sulfat, 0,025% Dodecylbenzolsulfonat, 0,05% $C_{16}C_{18}$-10EO (DMC, D = 1,04) | 1% | 3% | 0,0047 mN/m | klar |
| 13 | 0,0375% $C_{16}C_{18}$-7PO-0.1EO-Sulfat, 0,0125% Dodecylbenzolsulfonat, 0,025% $C_{16}C_{18}$-10EO (DMC, D = 1,04) | 1 % | 3% | 0,0029 mN/m | klar |

**Patentansprüche**

1.  Verfahren zur Erdölförderung, bei dem man eine wässrige Tensidformulierung umfassend mindestens ein nichtionisches Tensid und mindestens ein weiteres Tensid durch mindestens eine Injektionsbohrung in eine Erdöllagerstätte einpresst und der Lagerstätte durch mindestens eine Produktionsbohrung Rohöl entnimmt, **dadurch gekennzeichnet, dass** es sich bei dem Verfahren um Winsor Typ III-Mikroemulsionsfluten handelt, und die eingesetzte Tensidmischung mindestens

    (A) mindestens ein Tensid (A) der allgemeinen Formel $R^1$-O-($CH_2$-$CH_2$-O)$_x$-H, wobei $R^1$ für einen geradkettigen oder verzweigten aliphatischen Kohlenwasserstoffrest mit 9 bis 18 Kohlenstoffatomen steht und x für eine Zahl von 8 bis 30, mit der Maßgabe, dass die Polydispersität des Tensids (A) 1,01 bis 1,12 beträgt, sowie
    (B) mindestens ein davon verschiedenes Tensid (B) der allgemeinen Formel $R^2$-Y, wobei $R^2$ für einen geradkettigen oder verzweigten aliphatischen und/oder aromatischen Kohlenwasserstoffrest mit 8 bis 32 Kohlenstoffatomen steht und Y für eine hydrophile Gruppe,
    umfasst, wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

2.  Verfahren gemäß Anspruch 1, **dadurch gekennzeichnet, dass** es sich bei $R^1$ um einen linearen, aliphatischen Kohlenwasserstoffrest handelt, und x für eine Zahl von 8 bis 30 steht.

3.  Verfahren gemäß Anspruch 2, **dadurch gekennzeichnet, dass** die Polydispersität des Tensids (A) 1,01 bis 1,06 beträgt.

4.  Verfahren gemäß Anspruch 1, **dadurch gekennzeichnet, dass** es sich bei $R^1$ um einen verzweigten, aliphatischen Kohlenwasserstoffrest handelt, und x für eine Zahl von 10 bis 30 steht.

5.  Verfahren gemäß Anspruch 4, **dadurch gekennzeichnet, dass** die Polydispersität des Tensids (A) 1,04 bis 1,12 beträgt.

**6.** Verfahren gemäß einem der Ansprüche 1 bis 5, **dadurch gekennzeichnet, dass** es sich bei dem Tensid (B) um ein anionisches Tensid handelt.

**7.** Verfahren gemäß einem der Ansprüche 1 bis 5, **dadurch gekennzeichnet, dass** es sich bei der Gruppe Y des Tensids (B) um eine Gruppe ausgewählt aus der Gruppe von Sulfatgruppen, Sulfonatgruppen, Polyoxyalkylengruppen, anionisch modifizierten Polyoxyalkylengruppen, Betaingruppen, Glucosidgruppen oder Aminoxidgruppen handelt.

**8.** Verfahren gemäß einem der Ansprüche 1 bis 5, **dadurch gekennzeichnet, dass** es sich bei dem Tensid (B) um ein Tensid ausgewählt aus der Gruppe von Alkylethersulfonaten, Alkylethersulfaten oder Alkylethercarboxylaten handelt, wobei die Polyethergruppe des Tensids jeweils 2 bis 30 Ethereinheiten umfasst.

**9.** Verfahren gemäß einem der Ansprüche 1 bis 8, **dadurch gekennzeichnet, dass** die Gesamtkonzentration aller Tenside zusammen 0,05 bis 5 Gew. % bezüglich der Gesamtmenge der wässrigen Tensidformulierung beträgt.

**10.** Verfahren gemäß einem der Ansprüche 1 bis 9, **dadurch gekennzeichnet, dass** die Grenzflächenspannung zwischen Wasser und Öl beim Winsor Typ III-Mikroemulsionsfluten weniger als 0,1 mN/m beträgt.

**11.** Verfahren gemäß Anspruch 10, **dadurch gekennzeichnet, dass** die Grenzflächenspannung weniger als 0,01 mN/m beträgt.

**12.** Wässrige Tensidformulierung für die Erdölförderung, umfassend mindestens ein nichtionisches Tensid und mindestens ein weiteres Tensid, **dadurch gekennzeichnet dass** die Tensidmischung mindestens

(A) mindestens ein Tensid (A) der allgemeinen Formel $R^1$-O-$(CH_2$-$CH_2$-O$)_x$-H, wobei $R^1$ für einen geradkettigen oder verzweigten aliphatischen Kohlenwasserstoffrest mit 9 bis 18 Kohlenstoffatomen steht und x für eine Zahl von 8 bis 30, mit der Maßgabe, dass die Polydispersität des Tensids (A) 1,01 bis 1,12 beträgt, sowie
(B) mindestens ein davon verschiedenes Tensid (B) der allgemeinen Formel $R^2$-Y, wobei $R^2$ für einen geradkettigen oder verzweigten aliphatischen und/oder aromatischen Kohlenwasserstoffrest mit 8 bis 32 Kohlenstoffatomen steht und Y für eine hydrophile Gruppe,
umfasst, wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

**13.** Wässrige Tensidformulierung gemäß Anspruch 14, **dadurch gekennzeichnet, dass** die Konzentration aller Tenside zusammen 0,05 bis 5 Gew. % bezüglich der Gesamtmenge der wässrigen Tensidformulierung beträgt.

**Claims**

**1.** A process for mineral oil production in which an aqueous surfactant formulation comprising at least one nonionic surfactant and at least one further surfactant is forced through at least one injection well into a mineral oil deposit and crude oil is removed from the deposit through at least one production well, wherein the process is Winsor type III microemulsion flooding, and the surfactant mixture used at least comprises

(A) at least one surfactant (A) of the general formula $R^1$-O-$(CH_2$-$CH_2$-O$)_x$-H, in which $R^1$ is a straight-chain or branched aliphatic hydrocarbon radical having 9 to 18 carbon atoms and x is a number from 8 to 30, with the proviso that the polydispersity of the surfactant (A) is from 1.01 to 1.12, and
(B) at least one surfactant (B) differing therefrom and of the general formula $R^2$-Y, in which $R^2$ is a straight-chain or branched aliphatic and/or aromatic hydrocarbon radical having 8 to 32 carbon atoms and Y is a hydrophilic group,
the weight ratio (A)/(B) being from 10 : 1 to 1 : 20, and the proportion of the surfactants (A) and (B) together being at least 50% by weight, based on the amount of all surfactants in the surfactant mixture used.

**2.** The process according to claim 1, wherein $R^1$ is a linear, aliphatic hydrocarbon radical and x is a number from 8 to 30.

**3.** The process according to claim 2, wherein the polydispersity of the surfactant (A) is from 1.01 to 1.06.

4. The process according to claim 1, wherein $R^1$ is a branched, aliphatic hydrocarbon radical and x is a number from 10 to 30.

5. The process according to claim 4, wherein the polydispersity of the surfactant (A) is from 1.04 to 1.12.

6. The process according to any of claims 1 to 5, wherein the surfactant (B) is an anionic surfactant.

7. The process according to any of claims 1 to 5, wherein the group Y of the surfactant (B) is a group selected from the group consisting of sulfate groups, sulfonate groups, polyoxyalkylene groups, anionically modified polyoxyalkylene groups, betaine groups, glucoside groups or amine oxide groups.

8. The process according to any of claims 1 to 5, wherein the surfactant (B) is a surfactant selected from the group consisting of alkyl ether sulfonates, alkyl ether sulfates or alkyl ether carboxylates, the polyether group of the surfactant comprising in each case from 2 to 30 ether units.

9. The process according to any of claims 1 to 8, wherein the total concentration of all surfactants together is from 0.05 to 5% by weight, based on the total amount of the aqueous surfactant formulation.

10. The process according to any of claims 1 to 9, wherein the interfacial tension between water and oil in the Winsor type III microemulsion flooding is less than 0.1 mN/m.

11. The process according to claim 10, wherein the interfacial tension is less than 0.01 mN/m.

12. An aqueous surfactant formulation for mineral oil production, comprising at least one nonionic surfactant and at least one further surfactant, wherein the surfactant mixture at least comprises

(A) at least one surfactant (A) of the general formula $R^1$-O-(CH$_2$-CH$_2$-O)$_x$-H, in which $R^1$ is a straight-chain or branched aliphatic hydrocarbon radical having 9 to 18 carbon atoms and x is a number from 8 to 30, with the proviso that the polydispersity of the surfactant (A) is from 1.01 to 1.12, and
(B) at least one surfactant (B) differing therefrom and of the general formula $R^2$-Y, in which $R^2$ is a straight-chain or branched aliphatic and/or aromatic hydrocarbon radical having 8 to 32 carbon atoms and Y is a hydrophilic group,
the weight ratio (A)/(B) being from 10 : 1 to 1 : 20, and the proportion of the surfactants (A) and (B) together being at least 50% by weight, based on the amount of all surfactants in the surfactant mixture used.

13. The aqueous surfactant formulation according to claim 12, wherein the concentration of all surfactants together is from 0.05 to 5% by weight, based on the total amount of the aqueous surfactant formulation.

**Revendications**

1. Procédé pour l'extraction de pétrole, dans lequel on injecte dans un gisement pétrolifère par au moins un puits d'injection une composition aqueuse de tensioactifs comprenant au moins un tensioactif non ionique et au moins un autre tensioactif et on extrait le pétrole brut du gisement par au moins un puits de production, **caractérisé en ce que** dans le procédé il s'agit d'injection de microémulsion de type Winsor III, et la composition de tensioactifs utilisée au moins comprend

(A) au moins un tensioactif (A) de formule générale $R^1$-O-(CH$_2$-CH$_2$-O)$_x$-H, dans laquelle $R^1$ représente un radical hydrocarboné aliphatique à chaîne droite ou ramifiée ayant de 9 à 18 atomes de carbone et x représente un nombre valant de 8 à 30, étant entendu que la polydispersité du tensioactif (A) vaut de 1,01 à 1,12, ainsi que
(B) au moins un tensioactif (B) différent de celui-ci, de formule générale $R^2$-Y, $R^2$ représentant un radical hydrocarboné aliphatique à chaîne droite ou ramifiée et/ou aromatique ayant de 8 à 32 atomes de carbone et Y représentant un groupe hydrophile,
le rapport pondéral (A)/(B) valant de 10 : 1 à 1 : 20, et la proportion des tensioactifs (A) et (B) ensemble valant au moins 50 % en poids par rapport à la quantité de tous les tensioactifs dans le mélange de tensioactifs utilisé.

2. Procédé selon la revendication 1, **caractérisé en ce que** $R^1$ consiste en un radical hydrocarboné aliphatique linéaire, et x représente un nombre valant de 8 à 30.

**3.** Procédé selon la revendication 2, **caractérisé en ce que** la polydispersité du tensioactif (A) vaut de 1,01 à 1,06.

**4.** Procédé selon la revendication 1, **caractérisé en ce que** $R^1$ consiste en un radical hydrocarboné aliphatique ramifié, et x représente un nombre valant de 10 à 30.

**5.** Procédé selon la revendication 4, **caractérisé en ce que** la polydispersité du tensioactif (A) vaut de 1,04 à 1,12.

**6.** Procédé selon l'une quelconque des revendications 1 à 5, **caractérisé en ce que** le tensioactif (B) consiste en un tensioactif anionique.

**7.** Procédé selon l'une quelconque des revendications 1 à 5, **caractérisé en ce que** le groupe Y du tensioactif (B) consiste en un groupe choisi dans le groupe des groupes sulfate, des groupes sulfonate, des groupes polyoxyalkylène, des groupes polyoxyalkylène à modification anionique, des groupes bétaïne, des groupes glucosidiques ou des groupes oxyde d'amine.

**8.** Procédé selon l'une quelconque des revendications 1 à 5, **caractérisé en ce que** le tensioactif (B) consiste en un tensioactif choisi dans le groupes des alkyléthersulfonates, alkyléthersulfates ou alkyléthercarboxylates, le groupe polyéther du tensioactif comprenant chaque fois de 2 à 30 unités éther.

**9.** Procédé selon l'une quelconque des revendications 1 à 8, **caractérisé en ce que** la concentration totale de tous les tensioactifs ensemble vaut de 0,05 à 5 % en poids, par rapport à la quantité totale de la composition aqueuse de tensioactifs.

**10.** Procédé selon l'une quelconque des revendications 1 à 9, **caractérisé en ce que** dans le cas de l'injection de microémulsion de type Winsor III, la tension interfaciale entre eau et huile est inférieure à 0,1 mN/m.

**11.** Procédé selon la revendication 10, **caractérisé en ce que** la tension interfaciale est inférieure à 0,01 mN/m.

**12.** Composition aqueuse de tensioactifs pour l'extraction de pétrole, comprenant au moins un tensioactif non ionique et au moins un autre tensioactif, **caractérisée en ce que** le mélange de tensioactifs au moins comprend

(A) au moins un tensioactif (A) de formule générale $R^1$-$(CH_2$-$CH_2$-$O)_x$-H, dans laquelle $R^1$ représente un radical hydrocarboné aliphatique à chaîne droite ou ramifiée ayant de 9 à 18 atomes de carbone et x représente un nombre valant de 8 à 30, étant entendu que la polydispersité du tensioactif (A) vaut de 1,01 à 1,12, ainsi que
(B) au moins un tensioactif (B) différent de celui-ci, de formule générale $R^2$-Y, $R^2$ représentant un radical hydrocarboné aliphatique à chaîne droite ou ramifiée et/ou aromatique ayant de 8 à 32 atomes de carbone et Y représentant un groupe hydrophile,
le rapport pondéral (A)/(B) valant de 10 : 1 à 1 : 20, et la proportion des tensioactifs (A) et (B) ensemble valant au moins 50 % en poids par rapport à la quantité de tous les tensioactifs dans le mélange de tensioactifs utilisé.

**13.** Composition aqueuse de tensioactifs selon la revendication 12, **caractérisée en ce que** la concentration de tous les tensioactifs ensemble vaut de 0,05 à 5 % en poids, par rapport à la quantité totale de la composition aqueuse de tensioactifs.

## FIG.1

## FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3811505 A
- US 3811504 A
- US 4077471 A
- US 20060185845 A1
- US 20060189486 A1
- WO 2009124922 A

- DE 4325237 A1
- DE 10243361 A1
- WO 0074845 A
- WO 9916775 A
- WO 2006131541 A

**In der Beschreibung aufgeführte Nicht-Patentliteratur**

- *Journal of Petroleum Science and Engineering,* 1998, vol. 19, 265-280

- **C. HUH.** *J. Coll. Interf. Sc.,* 1979, vol. 71 (2